# EUROPÄISCHE PATENTSCHRIFT

(11) **EP 1 148 026 B1**
(45) Veröffentlichungstag und Bekanntmachung des Hinweises auf die Patenterteilung: **10.08.2016**
(21) Anmeldenummer: 00107817.9
(22) Anmeldetag: 12.04.2000
(51) Int. Cl.: C01B 33/14

(54) **Dispersionen**
Dispersions
Dispersions

(43) Veröffentlichungstag der Anmeldung: 24.10.2001
(73) Patentinhaber: Evonik Degussa GmbH, 45128 Essen (DE)
(72) Erfinder: Golchert, Rainer, 64807 Dieburg (DE); Mangold, Helmut, Dr., 63517 Rodenbach (DE); Scharfe, Thomas, 63755 Alzenau (DE)

(56) Entgegenhaltungen:
- EP-A- 0 850 876
- WO-A1-00/02814
- US-A- 5 116 535
- US-A- 5 827 363

## Beschreibung

Die Erfindung betrifft Dispersionen, ein Verfahren zu ihrer Herstellung sowie ihre Verwendung bei der Herstellung von Streichfarben zur Herstellung von Inkjet-Medien.

Es ist bekannt, aus pyrogen hergestellten Oxiden Dispersionen beispielsweise auf wässriger Basis herzustellen. Aus diesen wässrigen Dispersionen lassen sich beispielsweise Streichfarben herstellen, die auf Papier oder Folie aufgebracht werden. Die beschichteten Folien können dann mit einem Inkjet-Drucker bedruckt werden. Dabei ist es ein Ziel möglichst hochgefüllte Dispersionen (hoher Feststoffgehalt) bei niedriger Viskosität zu erhalten.

Gegenstand der Erfindung ist die Verwendung von Dispersionen, welche dadurch gekennzeichnet sind, dass sie aus einer flüssigen Phase, vorzugsweise Wasser und einer festen Phase bestehen, wobei die feste Phase aus einem mittels Aerosol dotierten pyrogenen Oxid besteht, dessen BET-Oberfläche zwischen 5 und 600 m²/g liegt, die Basiskomponente des pyrogenen Oxids eine nach der Art der Flammenhydrolyse oder Flammenoxidation hergestellte Kieselsäure ist, die mit einer oder mehreren Dotierungskomponenten - vorzugsweise einem Aluminiumoxid nach der Art der Aerosolaufbringung dotiert worden ist, wobei die Dotierungsmenge zwischen 1 und 200 000 ppm liegt und die Aufbringung der Dotierungskomponente(n) über ein Salz oder eine Salzmischung der Dotierkomponente(n) erfolgt, und die feste Phase in der Dispersion ein Gewichtsanteil zwischen 0,001 und 80 Gewichtsprozent hat, zur Herstellung von Streichfarben insbesondere für Inkjet-Papiere oder Inkjet-Folien oder sonstigen Inkjet-Materialien, als Ausgangsstoff zur Herstellung von Glas oder Glasbeschichtungen oder Schmelztiegeln, in der Dentalindustrie, in der pharmazeutischen Industrie, bei PET-Film-Anwendungen, als Ausgangsstoff zur Herstellung von Filterkeramiken oder Filtern, als Rostschutzmittel, in Tinten und Batterieseparatoren.

Diese Dispersionen lassen sich dadurch herstellen, dass in eine Flüssigkeit, vorzugsweise Wasser, ein mittels Aerosol dotiertes pyrogenes Oxid in einem Gewichtsverhältnis zwischen 0,001 und 80 Gewichtsprozent eingebracht wird, und diese Dispersion dann einem Vermahlungsschritt unterzogen wird, wobei die Vermahlung selbst mittels einer Kugel- oder Perlmühle oder einer Hochdruckmühle oder einer anderen bekannten Mühle, vorzugsweise mittels eines Dispergiersystems nach dem Rotor-Stator-Prinzip (Ultra-Turrax) erfolgen kann.

Der Vorteil der Verwendung der hochgefüllten und niedrigviskosen Dispersionen bei der Papierherstellung (das heißt bei der Herstellung von Streichfarben zur Beschichtung von Papieren und anderen Medien) liegt darin begründet, dass bei dem Trocknungsschritt nach dem Aufbringen der Dispersion (Streichfarbe) entsprechend weniger Wasser verdampft werden muss. Hierdurch ergibt sich eine deutliche Energieeinsparung.

### Beispiele

Aus der EP 850 876 sind pyrogene Oxide bekannt, die auf der Basis Siliziumdioxid mit einer oder mehreren Komponenten dotiert worden sind, wobei die Dotierung durch die Zugabe eines Aerosols in der Flamme erfolgt. Entsprechend dem dort beschriebenen Verfahren wird eine pyrogene mit Aluminiumoxid dotierte Kieselsäure hergestellt. Aus dieser dotierten pyrogenen Kieselsäure wird eine hochgefüllte wässrige Dispersion hergestellt, die eine niedrige Viskosität aufweist. Aus dieser wässrigen Dispersion werden durch Hinzufügen weiterer Komponenten Streichfarben hergestellt, die auf eine Folie aufgebracht und mit einem Tintenstrahldrucker bedruckt werden. Die so hergestellten Folien weisen eine exzellente Druckqualität auf.

**Beispiel 1:** Herstellung eines mittels Aerosol dotierten pyrogenen Siliziumoxides.

In einer Brenneranordnung, wie sie in der EP 0 850 876 beschrieben ist, wird gemäß dem dortigen Beispiel 2 ein dotiertes pyrogen hergestelltes Siliziumdioxid hergestellt.

Es werden 85 kg/h SiCl₄ verdampft und mit 51 Nm³/h Wasserstoff und mit 70 Nm³/h eines Stickstoff-Sauerstoffgemisches (mit 35 Vol.% O₂, Rest N₂) gemischt und in das Zentralrohr des Brenners eingespeist. Das Gasgemisch strömt aus einer Düse und brennt in eine wassergekühlte Brennkammer.

Aus der Manteldüse, die die Zentraldüse umgibt, strömen zur Vermeidung von Anbackungen 4 Nm³/h (Mantel-)Wasserstoff. In den Brennerraum werden zusätzlich 70 Nm³/h Sekundärluft zugegeben.

Aus einem im Zentralrohr befindlichen Axialrohr strömt ein Aerosol in das Zentralrohr. Das Aerosol ist ein Aluminiumchloridaerosol, das durch Zerstäubung mittels einer Zweistoffdüse aus einer 15-prozentigen wässrigen AlCl₃-Lösung erzeugt wird. Es wird ein Aerosolstrom von 1 kg/h (wässrige Salzlösung) erzeugt, wobei ein Traggasstrom von 16 Nm³/h Luft das Aerosol durch eine Heizstrecke befördert und wo es dabei erwärmt wird. Das Luft-Aerosolgasgemisch tritt dann mit ca. 180 °C aus dem Axialrohr in das Zentralrohr ein.

Das Aerosol wird gemeinsam mit dem Luft/SiCl₄-Gemisch verbrannt. Die Reaktionsgase und die entstandene mit Aluminiumoxid dotierte pyrogen hergestellte Kieselsäure werden in bekannter Weise durch Anlegen eines Unterdrucks durch ein Kühlsystem gesaugt und dabei abgekühlt. In einem Filter oder Zyklon wird der Feststoff (das dotierte pyrogene Oxid) vom Gasstrom abgetrennt.

Die dotierte pyrogen hergestellte Kieselsäure fällt als weißes feinteiliges Pulver an. Durch Behandeln mit wasserdampfhaltiger Luft bei erhöhter Temperatur werden anhaftende Salzsäurereste entfernt.

Das erhaltene mittels Aerosol dotierte pyrogene Siliziumdioxid weist die folgenden physikalisch-chemischen Kenndaten auf:

| | |
|---|---|
| BET: | 60 m²/g |
| pH (4%-wäßr. Dis.): | 3,9 |
| Stampfdichte: | 142 g/l |
| Chloridgehalt: | 180 ppm |
| Al₂O₃-Gehalt | 0,19 Gew. -% |
| DBP-Absorption: | 73 g/100 g |

| | |
|---|---|
| (DBP: Dibutylphtalat) | |

Mit dem dotierten pyrogenen Oxid wird eine wässrige Dispersion hergestellt. Die kommerziell erhältlichen Aerosile (pyrogen hergestellte Kieselsäure) der Degussa-Hüls-AG /Frankfurt OX 50 und Aerosil 90 werden als Vergleichsbeispiele herangezogen.

Tabelle 1 gibt die Kenndaten der Oxide wieder:

**Tabelle 1:**

| Physikalisch chemische Kenndaten des dotierten pyrogenen Oxids gemäß Beispiel 1 und Vergleichsbeispiele | | | |
|---|---|---|---|
| | Dotiertes pyrogenes Oxid gem Bsp. 1 | OX 50 | Aerosil 90 |
| BET m²/g | 60 | 50 | 90 |
| pH (4%-wässrige Disp.) | 3,9 | 3,8 -4,8 | 3,7 -4,7 |
| Stampfdichte g/l | 142 | 130 | 80 |
| Chloridgehalt ppm | 180 | < 250 | < 250 |
| Al₂O₃-Gehalt Gew.-% | 0,19 | <0,08 | 0,05 |
| SiO₂-Gehalt Gew.-% | 99,8 | >99,8 | >99, 8 |

Mit diesen drei unterschiedlichen pyrogenen Oxiden wird eine wässrige Dispersion hergestellt.

Dies geschieht unter Verwendung eines Rotor-Stator-Systems (Ultra-Turrax) bei einer Dispersionszeit von 30 Minuten in einem doppelwandigen Gefäß (mit Wasserkühlung). Es wird versucht eine (bezogen auf den Feststoff) 40-prozentige Dispersion (w = 0,40) herzustellen. Grundsätzlich kann die Herstellung dieser Dispersion aber auch durch andere Dispergieraggregate wie zum Beispiel Kugel- oder Perlmühlen oder unterschiedliche Arten von Strahl- oder Hochdruckmühlen (gegeneinander gerichtete Flüssigkeitsstrahlen) erfolgen.

Dabei zeigt sich, dass es mit diesem System nicht möglich ist, mit dem Aerosil 90 eine 40-prozentige Dispersion zu erzeugen, da das System zu hochviskos wird.

Die Viskosität der so hergestellten Dispersionen (dotiertes Oxid und Aerosil OX 50) wird nach 2 h mit einem Brookfield-Viskosimeter gemessen.

**Tabelle: 2**

| Viskosität der 40-prozentigen wässrigen Dispersion | | | |
|---|---|---|---|
| | Dotiertes pyrogenes Oxid gem Beispiel 1 | OX 50 | Aerosil 90: Mit Ultra-Turrax keine Herstellung einer 40-prozentigen Dispersion möglich |
| 5 UPM | 2420 | 2320 | > 10.000 |
| 10 UPM | 1520 | 1320 | |
| 20 UPM | 970 | 745 | |
| 50 UPM | 554 | 372 | |
| 100 UPM | 370 | 256 | |

| | | | |
|---|---|---|---|
| UPM = Umdrehungen pro Minute des Brookfield-Viskosimeters | | | |

Aus diesen 40-prozentigen wässrigen Dispersionen werden Inkjet-Streichfarben hergestellt.

Rezeptur zur Herstellung einer Inkjet-Streichfarbe:
Es werden 2 Dispersionen A und B hergestellt.
   Dispersion A ist eine 40-prozentige (w = 0,40) wässrige Dispersion, die das pyrogene Oxid (beziehungsweise das dotierte pyrogene Oxid) enthält. Diese wird durch 30 minütiges Dispergieren des pyrogenen Oxids oder des dotierten Oxids mit einem Ultra-Turrax-System in einem wassergekühlten Doppelmantelsystem hergestellt.
   Dispersion B ist eine (bezogen auf PVA) 10-prozentige wässrige Dispersion von Polyvinylalkohol (Feststoff, Abkürzung PVA) Mowiol 26-88 der Fa. Clariant.

Die beiden Dispersionen A und B werden innerhalb von 10 Minuten unter Rühren bei 500 UPM mit einer Dissolver-Scheibe zu einer Dispersion C zusammengefügt.

Die Dispersionen A und B werden so gemischt, dass sich in der späteren Dispersion C ein Massenverhältnis von 100:20 von Aerosil (beziehungsweise dotiertes pyrogenes Oxid) zu PVA ergibt. Im Falle einer 40-prozentigen Dispersion A wird diese mit der Dispersion B im Gewichtsverhältnis 1,25:1 gemischt um das Massenverhältnis (100:20 der Feststoffe) zu erzielen. Weiterhin wird (falls erforderlich) so viel Wasser zugefügt, dass sich eine - bezogen auf die Summe der Feststoffe (pyrogenes Oxid + PVA) - 24-prozentige Dispersion C ergibt.

Die Viskosität dieser Dispersion C, der Ink-Jet Streichfarbe, wird nach 24 h mittels eines Brookfield-Viskosimeters gemessen.

**Tabelle 3:**

| Viskosität der Streichfarbe gemessen nach 24 h: | | | |
|---|---|---|---|
| | Dotiertes Oxid gem. Beispiel 1 | OX 50 | Aerosil 90 |
| Feststoffgehalt der Streichfarbe (pyrogenes Oxid + PVA) Gew.-% | 24 | 24 | 22,5 |
| Viskosität [mPas] bei 100 UPM | 3244 | 685 | 3352 |

### (Anmerkung: Im Falle der Herstellung der Streichfarbe von Aerosil 90 wird von einer 30-prozentigen wässrigen Dispersion ausgegangen.)

Diese Streichfarben werden mit Hilfe eines profilierten Rakelstabes auf eine unbehandelte Polyesterfolie (Dicke 100 Mikrometern) aufgetragen. Die Nassfilmdicke der Streichfarbe beträgt 120 Mikrometer. Die Beschichtung wird bei 105 °C für 8 Minuten getrocknet.

Die Folie mit der aufgebrachten Beschichtung wird auf einem Epson Stylus Colour 800 mit höchster Auflösung bedruckt.

**Tabelle 4:**

| Bewertung des Druckergebnisses: | | | | | | |
|---|---|---|---|---|---|---|
| Bewertete Eigenschaft | Dotiertes pyrogenes Oxid gem. Beispiel 1 | | OX 50 | | Aerosil 90 | |
| | Bewertung | Note | Bewertung | Note | Bewertung | Note |
| Farbintensität | gut | 2 | ausreichend | 4 | befriedigend | 3 |
| Auflösung | sehr gut | 1 | befriedigend | 3 | gut | 2 |
| Farbverlauf (Bleeding) | Kein Bleeding | 1 | Bleeding deutlich ausgeprägt | 4 | geringes Bleeding | 2,5 |
| Trocknungszeit | sehr kurz | 1 | kurz | 2,5 | sehr kurz | 1 |
| Haftung auf Folie | gut | 2 | gut | 2 | mangelhaft | 5 |
| Durchschnitt | sehr gut bis gut | 1,4 | befriedigend | 3,1 | befriedigend | 2,7 |

| | | | | | | |
|---|---|---|---|---|---|---|
| Beste Note 1, schlechteste Note 6: | | | | | | |

In der Summe aller Eigenschaften der Beschichtungen, insbesondere hinsichtlich der Druckqualität, zeigt die aus dem dotierten Oxid hergestellte wässrige Dispersion beziehungsweise die daraus hergestellte Streichfarbe beziehungsweise die daraus wieder erzeugte Beschichtung die mit Abstand besten Ergebnisse bei der Bedruckung mit einem Inkjet-Drucker bei sehr geringer Trockenzeit.

Die Viskosität der wässrigen Dispersion des dotierten Oxides ist deutlich geringer als die einer nach dem gleichen Verfahren hergestellten Dispersion von Aerosil 90, bei der sich beispielsweise mit diesem Dispergierverfahren keine 40-prozentige wässrige Dispersion herstellen läßt.

Mit dem Aerosil OX 50, das eine mit dem dotierten Oxid vergleichbare BET-Oberfläche hat, läßt sich zwar eine wässrige Dispersion herstellen, die ähnliche Viskositäten wie diejenige des dotierten Oxides aufweist, allerdings ist die Druckqualität der daraus hergestellten Schicht (über die daraus zuvor hergestellte Streichfarbe) von nicht akzeptabler Qualität.

Mit der erfindungsgemäßen Dispersion ist es möglich auch einen hohen Feststoffgehalt der Streichfarbe zu erhalten, was bedeutet, dass man beim Trocknen der Beschichtung deutlich weniger Energie aufwenden muss.

Vergleicht man die Ergebnisse der Streichfarben gemäß der Tabelle 4, so stellt man eindeutig fest, dass das dotierte Oxid über die daraus hergestellte Dispersion die mit Abstand besten Druckergebnisse liefert. Auch die Haftung der Streichfarbe, die aus der erfindungsgemäßen wässrigen Dispersion hergestellt wurde, ist auf Folie sehr gut.

Dispersionen mit dem Aerosil OX 50 haben zwar auch eine relativ geringe Viskosität, aber die Druckqualität daraus hergestellter Streichfarben, beziehungsweise Beschichtungen ist nicht akzeptabel.

## Patentansprüche

1. Verwendung von Dispersionen, die sich dadurch auszeichnen, dass sie aus einer flüssigen Phase, vorzugsweise Wasser und einer festen Phase bestehen, wobei die feste Phase aus einem mittels Aerosol dotierten pyrogenen Oxid besteht, dessen BET-Oberfläche zwischen 5 und 600 m²/g liegt, die Basiskomponente des pyrogenen Oxids eine nach der Art der Flammenhydrolyse oder Flammenoxidation hergestellte Kieselsäure ist, die mit einer oder mehreren Dotierungskomponenten - vorzugsweise einem Aluminiumoxid nach der Art der Aerosolaufbringung dotiert worden ist, wobei die Dotierungsmenge zwischen 1 und 200 000 ppm liegt und die Aufbringung der Dotierungskomponente(n) über ein Salz oder eine Salzmischung der Dotierkomponente(n) erfolgt, und die feste Phase in der Dispersion ein Gewichtsanteil zwischen 0,001 und 80 Gewichtsprozent hat, zur Herstellung von Streichfarben insbesondere für Inkjet-Papiere oder Inkjet-Folien oder sonstigen Inkjet-Materialien, zur Herstellung von Glas oder Glasbeschichtungen oder Schmelztiegeln, in der Dentalindustrie, in der pharmazeutischen Industrie, bei PET-Film-Anwendungen, als Ausgangsstoff zur Herstellung von Filterkeramiken oder Filtern, als Rostschutzmittel, in Tinten und Batterieseparatoren.

## Claims

1. Use of dispersions which are **characterized in that** they consist of a liquid phase, preferably water, and a solid phase, where the solid phase consists of a pyrogenic oxide which is doped by means of aerosol and has a BET surface area in the range from 5 to 600 m²/g, the base component of the pyrogenic oxide is a silica which has been produced in the manner of flame hydrolysis or flame oxidation and has been doped with one or more doping components, preferably an aluminium oxide, in the manner of aerosol application, where the doping amount is in the range from 1 to 200 000 ppm and the application of the doping component(s) is effected by means of a salt or a salt mixture of the doping component(s), and the solid phase in the dispersion is present in a proportion by weight in the range from 0.001 to 80 per cent by weight, for producing coatings, in particular for inkjet papers or inkjet films or other inkjet materials, for producing glass or glass coatings or melting crucibles, in the dental industry, in the pharmaceutical industry, in PET film applications, as starting material for producing filter ceramics or filters, as antirusting agent, in inks and battery separators.

## Revendications

1. Utilisation de dispersions qui se caractérisent par le fait qu'elles se composent d'une phase liquide, de préférence d'eau, et d'une phase solide, la phase solide se composant d'un oxyde obtenu par voie pyrogène dopé au moyen d'un aérosol, dont la surface BET est comprise entre 5 et 600 m²/g, le composant de base de l'oxyde obtenu par voie pyrogène étant un acide silicique préparé par hydrolyse à la flamme ou oxydation à la flamme, qui a été dopé par application d'aérosol avec un ou plusieurs composants de dopage, de préférence un oxyde d'aluminium, la quantité de dopage étant comprise entre 1 et 200 000 ppm et l'application du ou des composants de dopage s'effectuant par le biais d'un sel ou d'un mélange de sel du ou des composants de dopage, et la phase solide dans la dispersion présentant une proportion pondérale comprise entre 0,001 et 80 pour cent en poids, pour la préparation de compositions de couchage, en particulier pour des papiers pour impression à jet d'encre ou des films pour impression à jet d'encre ou d'autres matériaux pour impression à jet d'encre, pour la fabrication de verre ou de revêtements de verre ou de creusets, dans l'industrie dentaire, dans l'industrie pharmaceutique, dans les applications de films PET, en tant que substance de départ pour la fabrication de céramiques filtrantes ou de filtres, en tant qu'agent antirouille, dans les encres et les séparateurs de batteries.
